# EUROPEAN PATENT SPECIFICATION

(11) **EP 1 799 468 B1**
(45) Date of publication and mention of the grant of the patent: **23.02.2011**
(21) Application number: 05782828.7
(22) Date of filing: 12.09.2005
(51) Int. Cl.: B60C 1/00, C08K 3/36, C08L 9/06

(54) **RUBBER COMPOSITION COMPRISING A POLYHEDRAL OLIGOMERIC SILSESQUIOXANE ADDITIVE**
EIN POLYEDRISCHES OLIGOMERES SILSESQUIOXANADDITIV UMFASSENDE KAUTSCHUKZUSAMMENSETZUNG
COMPOSITION DE CAOUTCHOUC COMPORTANT UN ADDITIF A BASE DE SILSESQUIOXANE OLIGOMERE POLYEDRE

(30) Priority: 11.09.2004 GB 0420205; 23.11.2004 GB 0425699
(43) Date of publication of application: 27.06.2007
(73) Proprietor: KUMHO EUROPEAN TECHNICAL CENTRE (OPERATING IN EUROPE ON BEHALF OF KUMHO TIRE CO. INC.), Birmingham Business Park, Birmingham B37 7YE (GB)
(72) Inventor: CRUTCHLEY, Gary S., Walsall, West Midlands (GB)
(74) Representative: Shaw, Matthew Nigel
(86) International application number: PCT/GB2005/003510
(87) International publication number: WO 2006/027618

(56) References cited:
- WO-A-2004/101653
- US-A1- 2002 052 434
- US-A1- 2003 050 408
- FU B X ET AL: "Physical gelation in ethylene-propylene copolymer melts induced by polyhedral oligomeric silsesquioxane (POSS) molecules" POLYMER, ELSEVIER SCIENCE PUBLISHERS B.V, GB, vol. 44, no. 5, March 2003 (2003-03), pages 1499-1506, XP004409090 ISSN: 0032-3861
- PAN G ET AL: "Synthesis and characterization of fillers of controlled structure based on polyhedral oligomeric silsesquioxane cages and their use in reinforcing siloxane elastomers" Journal of Polymer Science, Part B (Polymer Physics) Wiley USA, vol. 41, no. 24, 15 December 2003 (2003-12-15), pages 3314-3323, XP002355777 ISSN: 0887-6266
- J.D. LICHTENHAN, HYBRID PLASTICS: "NanostructuredTM Chemicals: Simplifying "Nano" Technology" 10TH FORESIGHT CONFERENCE ON MOLECULAR NANOTECHNOLOGY, [Online] 11 October 2003 (2003-10-11), - 13 October 2003 (2003-10-13) XP002355766 Maryland 20814, US Retrieved from the Internet: URL:http://www.foresight.org/Conferences/M NT10/Abstracts/Lichtenhan/> [retrieved on 2005-11-24]
- CRUTCHLEY G.S.: "Nanoparticles and their possible use in rubber" KUMHO EUROPEAN TECHNICAL CENTRE, [Online] March 2005 (2005-03), XP002355767 GB Retrieved from the Internet: URL:www.kumho-euro.com/eurotech/binary/nan oparticles.pdf> [retrieved on 2005-11-24]

## Description

The present invention relates to a vucanisable rubber composition, which can be used for the manufacture of tyres and to a process for the preparation of such a composition. The rubber composition of the invention possesses improved hysteresis and physical properties, particularly after vulcanisation.

As oil prices have steadily increased and the need to preserve the environment has become an issue of great importance, it has become desirable to produce rubber compositions having improved physical and hysteretic properties. These compositions can be used in the manufacture of various semi-finished products involved in the manufacture of tyres, for example, under layers, sidewalls and treads, and in order to obtain tyres having reduced rolling resistance. Reducing the rolling resistance of tyres lowers the vehicle fuel consumption, which reduces the emission of exhaust gases from the vehicle.

When considering reducing rolling resistance it is also necessary to consider the grip and abrasion properties of the tyre as alteration of one property can impact on the other properties. In reducing rolling resistance, grip and abrasion resistance should not be adversely affected.

To achieve this objective, numerous solutions have been proposed. In particular work has been carried out using a variety of fillers, such as silica and carbon black.

For example, French patent publication No. 2 740 778 discloses the use of diene polymers bearing a silanol function and a polysiloxane block having a silanol end group. These functionalised polymers are intended to be incorporated into vulcanised rubber compositions including silica, as a reinforcing filler, and other fillers comprising a blend of silica and carbon black. These rubber compositions have improved physical and hysteretic properties.

US-A-2003/050408 discloses a rubber compound containing a polyhedral oligomeric silsesquioxane for the production of tyres improved in tread wear and tear.

The applicants have surprisingly discovered that a rubber composition can be modified by the addition of a silicon containing nanoscale additive to a rubber compound according to the method of the invention. The resultant rubber compound can be used to produce tyres with greater traction in wet weather and improved rolling resistance, with little or no effect on abrasion resistance.

Accordingly the present invention provides method for producing a rubber composition including one or more polyhedral oligomeric silsesquioxanes.

It is known in the art of rubber manufacture that a rubber composition is made from a) a rubber compound masterbatch, which generally includes one or more rubber polymers and one or more fillers, and b) one or more additives. The rubber composition of the present invention includes the or each polyhedral oligomeric silsesquioxane as an additive to a rubber compound masterbatch.

The present invention provides
a method of producing a rubber composition including the following stages:
i) a first mixing stage for production of a rubber compound masterbatch;
ii) a second mixing stage for addition of other compounding ingredients; and
iii) a third mixing stage for addition of curatives to produce the final rubber composition;
wherein one or more polyhedral oligomeric silsesquioxanes are added in the second mixing stage, after the production of the masterbatch.

The method preferably comprises the production of a rubber compound masterbatch and preferably further comprises the addition of one or more additives to the rubber compound masterbatch. The present invention also provides a rubber composition obtainable by the above method.

The polyhedral oligomeric silsesquioxane is added after production of the rubber compound masterbatch and it is preferred that the masterbatch has been heated to a temperature of between 80-100°C, more preferably 85 °C.

The rubber compound masterbatch may have undergone a silica cross linking reaction, most preferably before addition of the polyhedral oligomeric silsesquioxane.

The rubber polymers of the rubber compound masterbatch typically comprise of a mixture of diene polymers, especially butadiene and styrene butadiene polymers. The rubber polymers can also comprise natural rubber, polyisoprenes or terpolymers, such as styrene butadiene acrylonitrile rubber (SNBR) or styrene butadiene isoprene rubber (SIBR). The rubber polymers may also comprise derivatives of any of the aforementioned polymers.

The masterbatch further comprises one or more fillers, for example one or more silica fillers.

The rubber composition may also comprise any of the usual additives for rubber compositions, for example silane coupling agents and suitable oils.

It will be appreciated that the above method does not exclude the addition of other polymers, additives and the like to the initial masterbatch.

Polyhedral oligomeric silsesquioxanes (POSS) are intermediate compounds between silica (SiO₂) and silicones (R₂SiO) and may be represented by the formula: RSiO_{1.5}, wherein R is selected from alkyl, cyclo alkyl and aryl groups having from 1 to 20 carbon atoms.

Preferably R is selected from cyclohexyl, ethyl, isobutyl, isooctyl, vinyl and phenyl groups. The most preferred polyhedral oligomeric silsesquioxanes are trisilanol isobutyl polyhedral oligomeric silsesquioxane and trisilanol isooctyl polyhedral oligomeric silsesquioxane.

The size of the polyhedral oligomeric silsesquioxanes is preferably from 0.7 to 50nm and most preferably from 1 to 3nm.

The or each polyhedral oligomeric silsesquioxane is preferably added to the masterbatch in an amount of 1 to 10 parts per hundred rubber polymer, more preferably 1 to 6 parts per hundred rubber polymer and most preferably 2 to 4 parts per hundred rubber polymer, for example 2 parts per hundred rubber polymer.

The present invention also provides the use of a rubber composition of the present invention made by the method of the present invention, in the manufacture of tyres and any component products used in the manufacture of tyres and any products that could be used in conjunction with tyres, particularly to enhance the performance of the tyres.

The invention will now be described, merely by way of example by reference to the following experimental details and the drawings in which:
**Figure 1** is a graph of Tg versus Tan δ @ 0°C;
**Figure 2** is a graph of Tan δ @ 0°C versus Tan 8 @ 70°C; and
**Figure 3** is a graph of TS1 versus TC90.

**Table 1 - Formulations used**

| Rubber Compound Masterbatch (first stage mixing): | | | | | | | | |
|---|---|---|---|---|---|---|---|---|
| **Ingredient** | **Level (phr)** | **Level (phr)** | | | | | | |
| | **Control** | **A** | **B** | **C** | **D** | **E** | **F** | **G** |
| Buna VSL 55525-1 | 110.04 | 110.04 | 110.04 | 110.04 | 110.04 | 110.04 | 110.04 | 110.04 |
| Buna CB22 | 20.00 | 20.00 | 20.00 | 20.00 | 20.00 | 20.00 | 20.00 | 20.00 |
| Ultrasil VN3 | 80.00 | 80.00 | 80.00 | 80.00 | 80.00 | 80.00 | 80.00 | 80.00 |
| Silane X505 | 12.80 | 12.80 | 12.80 | 12.80 | 12.80 | 12.80 | 12.80 | 12.80 |
| Aromatic Oil (Mobisol 30) | 5.00 | 5.00 | 5.00 | 5.00 | 5.00 | 5.00 | 5.00 | 5.00 |
| Trisilanol isobutyl POSS | 0.00 | 3.50 | 0.00 | 0.00 | 0.00 | 0.00 | 0.00 | 0.00 |

| Rubber composition ingredients: | | | | | | | | |
|---|---|---|---|---|---|---|---|---|
| **Ingredient (second stage)** | **Level (phr)** | | | | | | | |
| **Final Composition** | **Control** | **A** | **B** | **C** | **D** | **E** | **F** | **G** |
| Zinc Oxide | 2.50 | 2.50 | 2.50 | 2.50 | 2.50 | 2.50 | 2.50 | 2.50 |
| Stearic Acid | 1.00 | 1.00 | 1.00 | 1.00 | 1.00 | 1.00 | 1.00 | 1.00 |
| Santoflex 13 | 2.00 | 2.00 | 2.00 | 2.00 | 2.00 | 2.00 | 2.00 | 2.00 |
| Antilux 111 | 1.00 | 1.00 | 1.00 | 1.00 | 1.00 | 1.00 | 1.00 | 1.00 |
| Trisilanol isobutyl POSS | 0.00 | 0.00 | 3.50 | 3.00 | 2.00 | 1.00 | 3.50 | 3.50 |
| Vinyl POSS | 0.00 | 0.00 | 0.00 | 0.00 | 0.00 | 0.00 | 2.40 | 0.00 |
| Phenyl POSS | 0.00 | 0.00 | 0.00 | 0.00 | 0.00 | 0.00 | 0.00 | 2.40 |

| **Ingredient (Third Stage)** | **Level (phr)** | | | | | | | |
|---|---|---|---|---|---|---|---|---|
| Sulphur | 1.40 | 1.40 | 1.40 | 1.40 | 1.40 | 1.40 | 1.40 | 1.40 |
| CBS | 1.70 | 1.70 | 1.70 | 1.70 | 1.70 | 1.70 | 1.70 | 1.70 |
| DPG | 2.00 | 2.00 | 2.00 | 2.00 | 2.00 | 2.00 | 2.00 | 2.00 |

Compound A includes the polyhedral oligomeric silsesquioxane in the first stage of the mixing process and is not of the invention.

Compounds B - G include the polyhedral oligomeric silsesquioxane in the second stage of the mixing process. In addition compounds B - E each include varying levels of polyhedral oligomeric silsesquioxane and compounds F and G include more than one polyhedral oligomeric silsesquioxane.

These compounds were produced in a three stage process. The first stage of the mixing process produces a rubber compound masterbatch. In the second stage of the process other compounding ingredients are added. In the final stage, curatives are added to produce a final rubber composition.

### The first mixing stage:

The first stage masterbatches were mixed on a laboratory Banbury type mixer under the following conditions:

| | |
|---|---|
| Banbury temperature | 85°C |
| Rotor speed | 72rpm |

| | |
|---|---|
| 0 Sec: | Add SBR (styrene butadiene) followed by the Buna |
| CB22 | |
| 60 Sec: | Add ½ silica (Ultrasil VN3) and ½ silane (X50S) |
| 120 Sec: | Add remaining ½ silica and ½ silane and any oil and polyhedral oligomeric silsesquioxane present in the first stage mixing masterbatch ingredients |
| 180 Sec: | Ram up/down |
| 240 Sec: | Sweep ramp |
| 300 Sec: | Dump |

After mixing the batch temperature was measured using a needle pyrometer. The batch was then placed on a two-roll mill, any loose powder added, and the batch sheeted off. The mill conditions were:

Roll temperatures:

| | |
|---|---|
| Front: | 20°C |
| Back: | 20°C |

Roll speed:

| | |
|---|---|
| Front: | 13rpm |
| Back: | 15rpm |
| Nip width set: | 2mm |

The batches were weighed after being sheeted off.

### The second mixing stage:

The second stage of mixing was performed on a laboratory Banbury type mixer as follows:

| | |
|---|---|
| Banbury temperature: | 80°C |
| Rotor speed: | 55rpm |

| | |
|---|---|
| 0 Sec: | Add the relevant masterbatch |
| 60 Sec: | Add polyhedral oligomeric silsesquioxane, if present in the second stage rubber composition mixing ingredients, zinc oxide, stearic acid, santoflex 13, wax (Antilux 111) and silanol, if present. |
| 180 Sec: | Sweep ram |
| 480 Sec: | Dump |

### The third mixing stage:

The compound from the second stage was then transferred to an 18" mill fitted with a scraper blade and the roll temperatures were set at 20°C for the final mill stage.

The mixed material was bounded on the mill at a nip width of 3mm.

The sulphur and accelerators (CBS and DPG) were added and dispersed. Once the sulphur and accelerators had been thoroughly dispersed the batch was refined by passing it six times through a tight nip. The completed batch was then sheeted off at a nip width of 3mm.

A sample of each compound was taken and subjected to cure characteristic measurement at 160°C in an Alpha Technologies MDR 2000E Rheometer.

### RESULTS

### 1. Effect of polyhedral oligomeric silsesquioxanes on physical properties of rubber compositions

### Tensile Properties

To determine the tensile properties of the rubber compositions the tensile strength and elongation at break were determined in accordance with BS 903: Part A2: Type 1 dumbell.

The crescent tear at room temperature was determined in accordance with BS/ISO 43-1.

### Resilience

Dunlop resilience was determined in accordance with BS903: Part A8.

Hampden resilience was determined in accordance with DIN53512, which is equivalent to ISO466

### Hardness

Hardness was determined in accordance with BS 903: Part A26. All results are in International Rubber Hardness Degrees (IRHD).

### Specific Gravity

SG was determined in accordance with BS903: Part A1.

### Abrasion Resistance

Akron abrasion was determined in accordance with BS 903: Part A9: Method B, 15° angle.

The results of the above tests on the rubber compositions of the present invention are shown in Tables 2a and 2b.

**Table 2a - Control Compositions**

| | Control 1 | Control 2 | Control 3 | Control 4 | Control 5 | Ave control |
|---|---|---|---|---|---|---|
| Mooney | 107.50 | 111.20 | 113.00 | 116.00 | 113.80 | 112.30 |
| ML1+4@100°C | | | | | | |
| T5 | 22.73 | 20.98 | 20.48 | 20.50 | 19.97 | 20.93 |
| T10 | 27.87 | 25.93 | 25.63 | 25.57 | 25.10 | 26.02 |
| **MDR 30'@160°C** | | | | | | |
| ML | 3.97 | 3.83 | 3.95 | 4.02 | 3.96 | 3.95 |
| TS1 | 0.61 | 0.56 | 0.57 | 0.57 | 0.59 | 0.58 |
| TC90 | 19.79 | 19.25 | 19.19 | 19.09 | 19.11 | 19.29 |
| MH | 18.71 | 18.51 | 18.43 | 18.44 | 18.57 | 18.53 |
| MH-ML | 14.74 | 14.68 | 14.48 | 14.42 | 14.61 | 14.59 |
| Hardness (IRHD) | 78.00 | 77.00 | 76.00 | 77.00 | 77.00 | 77.00 |
| SG | 1.212 | 1.211 | 1.209 | 1.210 | 1.209 | 1.210 |
| **Tensile Properties** | | | | | | |
| Tensile strength (Mpa) | 17.60 | 17.40 | 18.10 | 18.30 | 17.80 | 17.84 |
| Modulus at 100% | 3.00 | 3.17 | 3.19 | 3.06 | 3.10 | 3.10 |
| Modulus at 300% | 12.90 | 14.10 | 14.20 | 13.70 | 13.50 | 13.68 |
| Extension at Break (%) | 365.00 | 351.00 | 359.00 | 378.00 | 373.00 | 365.20 |
| Crescent tear at RT | 43.00 | 41.50 | 37.00 | 38.60 | 38.40 | 39.70 |
| Dunlop resilience at RT | 35.50 | 35.50 | 35.50 | 38.20 | 38.20 | 36.58 |
| Hampden Resilience at RT | 24.00 | 24.00 | 24.00 | 24.00 | | 24.00 |
| Akron abrasion loss | 0.110 | 0.115 | 0.103 | 0.140 | 0.106 | 0.115 |
| **VES Data** | | | | | | |
| Tg | -7.291 | -7.161 | -7.674 | -6.827 | -6.927 | -7.176 |
| tan d @ 70°C (10Hz, | 0.126 | 0.119 | 0.120 | 0.119 | 0.119 | 0.121 |
| 0.53%) | | | | | | |
| E' | 19.00 | 18.20 | 18.20 | 15.40 | 17.10 | 17.58 |
| E" | 2.60 | 2.30 | 2.30 | 1.90 | 2.20 | 2.26 |
| E* | 19.18 | 18.34 | 18.34 | 15.52 | 17.24 | 17.72 |
| tan d @ 0°C (10Hz, 0.56%) | 0.483 | 0.513 | 0.486 | 0.508 | 0.508 | 0.500 |
| E' | 109.20 | 110.60 | 112.50 | 96.60 | 111.80 | 108.14 |
| E" | 52.70 | 56.70 | 54.70 | 49.00 | 56.80 | 53.98 |
| E* | 121.25 | 124.29 | 125.09 | 108.32 | 125.40 | 120.87 |

**Table 2b - Compositions A - G of the present application**

| | **A** | **B** | **C** | **D** | **E** | **F** | **G** |
|---|---|---|---|---|---|---|---|
| Mooney ML1+4@100°C | 75.30 | 83.80 | 85.10 | 90.60 | 101.00 | 79.80 | 81.20 |
| T5 | | 30.00 | 30.57 | 29.65 | 28.32 | 26.53 | 30.63 |
| MDR 30'@160°C | | | | | | | |
| ML | 2.04 | 2.17 | 2.19 | 2.46 | 2.85 | 2.10 | 2.17 |
| TS1 | 2.53 | 2.60 | 2.45 | 2.08 | 1.38 | 2.36 | 2.56 |
| TC90 | 15.97 | 14.90 | 15.37 | 16.98 | 17.76 | 12.54 | 14.64 |
| MH | 15.89 | 13.58 | 13.77 | 14.49 | 15.46 | 13.11 | 13.94 |
| MH-ML | 13.85 | 11.41 | 11.58 | 12.03 | 12.61 | 11.01 | 11.77 |
| Hardness (IRHD) | 71.00 | 64.00 | 66.00 | 67.00 | 70.00 | 63.00 | 65.00 |
| SG | 1.207 | 1.211 | 1.209 | 1.208 | 1.209 | 1.207 | 1.209 |
| **Tensile properties** | | | | | | | |
| TS | 15.20 | 17.50 | 16.30 | 18.50 | 17.70 | 19.00 | 17.60 |
| Modulus at 100% | 2.73 | 2.66 | 2.61 | 2.90 | 2.99 | 2.00. | 2.50 |
| Modulus at 300% | 10.90 | 12.20 | 12.00 | 13.40 | 13.50 | 9.77 | 11.70 |
| Extension at Break | 389.00 | 399.00 | 381.00 | 393.00 | 370.00 | 508.00 | .420.00 |
| Crescent tear at RT | 45.90 | 45.90 | 46.50 | 55.30 | 41.40 | 57.30 | 43.30 |
| Dunlop resilience at RT | 32.90 | 38.20 | 38.20 | 38.20 | 38.20 | 36.90 | 36.20 |
| Hampden Resilience at RT | 22.00 | 24.00 | 24.00 | 22.00 | 24.00 | 23.00 | 24.00 |
| Akron abrasion loss | 0.113 | 0.112 | 0.124 | 0.092 | 0.104 | 0.071 | 0.164 |
| **VES Data** | | | | | | | |
| Tg | -3.277 | -4.441 | -3.427 | -4.247 | -5.734 | -3.317 | -4.007 |
| tan d @ 70°C (10Hz, 0.53%° | 0.124 | 0.110 | 0.113 | 0.114 | 0.113 | 0.114 | 0.112 |
| E' | 14.60 | 10.00 | 10.40 | 11.40 | 12.00 | 9.40 | 10.40 |
| E" | 2.00 | 1.20 | 1.20 | 1.40 | 1.40 | 1.10 | 1.20 |
| E* | 14.74 | 10.07 | 10.47 | 11.49 | 12.08 | 9.46 | 10.47 |
| tan d @ 0°C (10Hz, 0.56%) | 0.614 | 0.657 | 0.664 | 0.649 | 0.590 | 0.686 | 0.669 |
| E' | 112.30 | 76.20 | 78.10 | 84.10 | 85.40 | 79.20 | 76.60 |
| E" | 69.00 | 50.10 | 51.90 | 54.60 | 50.40 | 54.40 | 51.30 |
| E* | 131.80 | 91.19 | 93.77 | 100.27 | 99.16 | 96.08 | 92.19 |

### 2) Effect of polyhedral oligomeric silsesquioxanes on viscoelasticity

To determine the viscoelastic properties of the rubber composition a viscoelastic spectrometer (VES) was used. The results are set out in Tables 2a and 2b above.

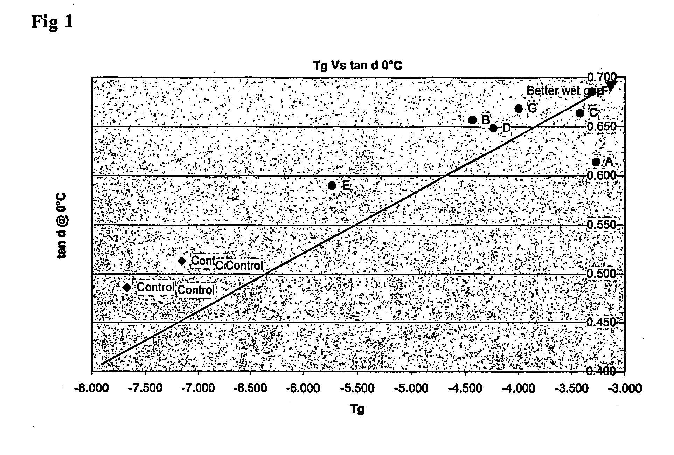

The results show that polyhedral oligomeric silsesquioxanes, in particular trisilanol isobutyl polyhedral oligomeric silsesquioxane, caused increases in Tg and in Tanδ@0°C compared to the standard rubber compounds, therefore giving rise to a beneficial effect on wet grip in tyres. The beneficial effects can be seen in a graphical form in Figure 1.

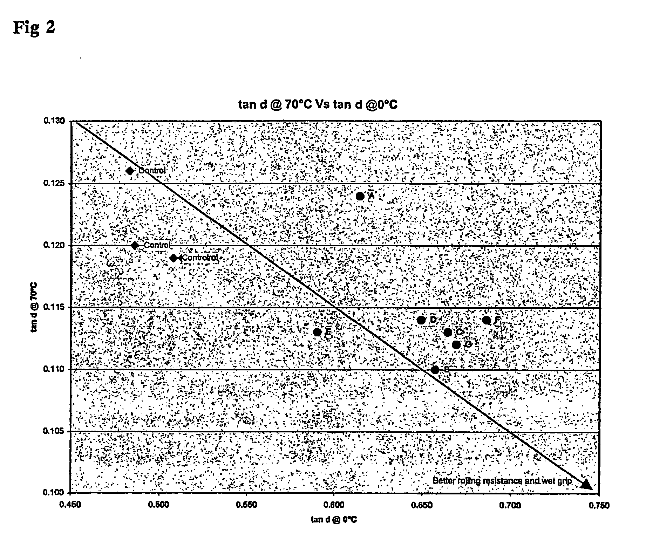

The results also show that polyhedral oligomeric silsesquioxanes, in particular trisilanol isobutyl polyhedral oligomeric silsesquioxane, caused an increase in Tanδ@0°C and an approximately level, or slightly lower, measurement in Tanδ@70°C, therefore giving rise to a wet grip benefit with little or no detriment in terms of tyre rolling resistance. The addition of the polyhedral oligomeric silsesquioxanes in the second stage of mixing was seen to give rise to the greatest wet grip benefit with least detriment in terms of tyre rolling resistance. Figure 2 shows the beneficial effects of the polyhedral oligomeric silsesquioxane on wet grip and rolling resistance.

The polyhedral oligomeric silsesquioxane containing compounds showed a low value for abrasion resistance, with a high Tg value, indicating that these compounds would have the best wet grip, without a deterioration in tyre wear.

Accordingly polyhedral oligomeric silsesquioxanes, in particular trisilanol isobutyl polyhedral oligomeric silsesquioxane showed the ability to modify the viscoelastic properties of an all silica passenger car radial (PCR) tyre tread compound in a way that is advantageous. In particular, the inclusion of this material offers a benefit in terms of wet grip, without having any great deterioration in the other compound properties.

### 3) Effect of polyhedral oligomeric silsesquioxanes on cure characteristics

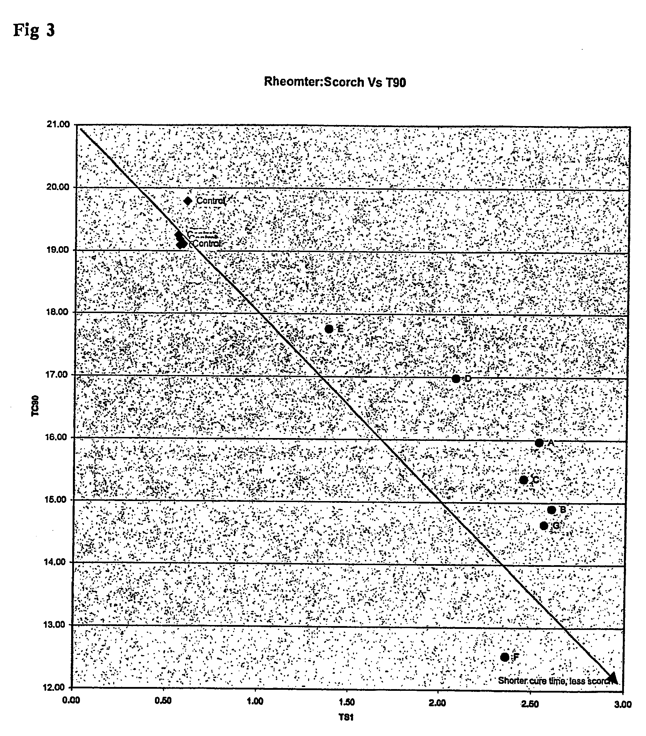

The cure characteristics for compounds A - G compared to the control compounds are set out in Tables 2a and 2b above and shown in graphical form in Figure 3.

The addition of the polyhedral oligomeric silsesquioxanes affected the cure characteristics of the rubber compositions A - G by giving rise to a Decrease in T_{C90}, which means that the cure time for the rubber composition is reduced, as it will reach 90% cure in a shorter time. Rubber products made from moulds can be removed from the moulds when cured to 90% so the rubber compositions of the present invention must spend a shorter time in the mould before they can be removed.

### 4) Effect of the polyhedral oligomeric silsesquioxanes and additional filler on physical properties.

The results of the study carried out appear to show that the point at which the polyhedral oligomeric silsesquioxane additive is added in the mixing cycle is important to the hardness of the compound obtained. Experimentation has shown that if the additive is added in the second mixing stage, a greater hardness is observed than when the additive is added in the first stage.

Compounds A - G would appear to exhibit comparable resilience and abrasion loss properties.

Accordingly the results show that polyhedral oligomeric silsesquioxanes, in particular trisilanol isobutyl polyhedral oligomeric silsesquioxane have the ability to modify the viscoelastic properties of an all silica passenger car radial (PCR) tyre tread compound in a way that is advantageous. In particular, the inclusion of this material offers a benefit in terms of wet grip, without having any great deterioration in the other compound properties. Furthermore the cure characteristics of the rubber composition are also improved by the addition of the polyhedral oligomeric silsesquioxane.

## Claims

1. A method of producing a rubber composition including the following stages:
i) a first mixing stage for production of a rubber compound masterbatch;
ii) a second mixing stage for addition of other compounding ingredients; and
iii) a third mixing stage for addition of curatives to produce the final rubber composition;
wherein one or more polyhedral oligomeric silsesquioxanes are added in the second mixing stage, after the production of the masterbatch.

2. A method according to Claim 1 in which the or each polyhedral oligomeric silsesquioxane is added in the second mixing stage to the masterbatch to give a total amount of 1 to 10 parts per hundred rubber polymer.

3. A method according to Claim 1 or Claim2 in which the or each polyhedral oligomeric silsesquioxane is added in the second mixing stage to the masterbatch to give a total amount of 2 to 6 parts per hundred rubber polymer.

4. A method according to claims 2 or 3 in which the or each polyhedral oligomeric silsesquioxane is added in the second mixing stage to the masterbatch to give a total amount of 2 parts per hundred rubber polymer.

5. A method according to claims 2 to 4 wherein the rubber compound masterbatch or the rubber composition is subjected to vulcanisation.

6. Use of a rubber composition made by the method of any of the preceding claims in the manufacture of tyres and any component products used in the manufacture of tyres and any products that could be used in conjunction with tyres, particularly to enhance the performance of tyres.

7. A rubber composition obtainable by a process including the following stages:
i) a first mixing stage for production of a rubber compound masterbatch;
ii) a second mixing stage for addition of other compounding ingredients; and
iii) a third mixing stage for addition of curatives to produce the final rubber composition;
comprising one or more polyhedral oligomeric silsesquioxanes added to the composition in the second mixing stage.

8. A rubber composition according to Claim 7 wherein the rubber compound masterbatch comprises one or more diene polymers, or derivatives or a mixture thereof.

9. A rubber composition according to Claim 8 wherein the diene polymers are selected from butadiene, styrene butadiene and derivatives, or mixtures, thereof.

10. A rubber composition according to any of Claims 7, 8 or 9 wherein the rubber composition masterbatch comprises natural rubber, a polyisoprene or a terpolymer, or derivatives or mixtures thereof.

11. A rubber composition according to Claim 10 wherein the terpolymer is styrene butadiene acrylonitrile rubber (SNBR) or styrene butadiene isoprene rubber (SIBR), or mixtures or derivatives thereof.

12. A rubber composition according to any of Claims 7 to 11 wherein the or each polyhedral oligomeric silsesquioxane is represented by the formula:
RSiO_{1.5}
wherein R is selected from alkly, cycloalkyl and aryl groups having from 1 to 20 carbon atoms.

13. A rubber composition according to Claim 12 wherein R is selected from cyclohexyl, ethyl, isobutyl, isooctyl, vinyl and phenyl groups.

14. A rubber composition according to Claim 13 wherein the or each polyhedral oligomeric silsesquioxane is selected from trisilanol isobutyl polyhedral oligomeric silsesquioxane and trisilanol isooctyl polyhedral oligomeric silsesquioxane.

15. A tyre made from the composition of any of Claims 7 to 14.

## Patentansprüche

1. Verfahren zur Herstellung einer Kautschukzusammensetzung, folgende Stufen aufweisend:
I) eine erste Mischstufe zum Herstellen eines Kautschukgemisch-Masterbatches,
II) eine zweite Stufe zum Zusetzen anderer Gemischbestandteile und
III) eine dritte Mischstufe zum Zusetzen von Härtern, um die fertige Kautschukzusammensetzung herzustellen,
wobei in der zweiten Mischstufe, nach der Herstellung des Masterbatches, ein oder mehrere polyedrische oligomere Silsesquioxane hinzugefügt werden.

2. Verfahren nach Anspruch 1, wobei das eine oder alle polyedrische(n) oligomere(n) Silsesquioxan(e) derart in der zweiten Mischstufe zum Masterbatch zugesetzt wird/werden, dass eine Gesamtmenge Kautschukpolymer von 1 bis 10 Teilen pro Einhundert erzielt wird.

3. Verfahren nach Anspruch 1 oder 2, wobei das eine oder alle polyedrische(n) oligomere(n) Silsesquioxan(e) derart in der zweiten Mischstufe zum Masterbatch zugesetzt wird/werden, dass eine Gesamtmenge von 2 bis 6 Teilen pro einhundert Teile Kautschukpolymer erzielt wird.

4. Verfahren nach Anspruch 2 oder 3, wobei das eine oder alle polyedrische(n) oligomere(n) Silsesquioxan(e) derart in der zweiten Mischstufe zum Masterbatch zugesetzt wird/werden, dass eine Gesamtmenge von 2 Teilen pro einhundert Teile Kautschukpolymer erzielt wird.

5. Verfahren nach Anspruch 2 bis 4, wobei das Kautschukgemisch-Masterbatch oder die Kautschukzusammensetzung der Vulkanisation unterzogen wird.

6. Verwendung der im Verfahren nach einem der vorhergehenden Ansprüche hergestellten Kautschukzusammensetzung bei der Herstellung von Reifen und Teilprodukten, die bei der Herstellung von Reifen verwendet werden, sowie von Produkten, die in Verbindung mit Reifen verwendet werden können, insbesondere zur Verbesserung der Leistung von Reifen.

7. Kautschukzusammensetzung, die durch ein Verfahren mit folgenden Stufen erzielt werden kann:
I) eine erste Mischstufe zum Herstellen eines Kautschukgemisch-Masterbatches,
II) eine zweite Stufe zum Zusetzen anderer Gemischbestandteile und
III) eine dritte Mischstufe zum Zusetzen von Härtern, um die fertige Kautschukzusammensetzung herzustellen,
die ein oder mehrere polyedrische oligomere Silsesquioxane umfasst, die der Zusammensetzung in der zweiten Mischstufe zugesetzt werden.

8. Kautschukzusammensetzung nach Anspruch 7, wobei das Kautschukgemisch-Masterbatch ein oder mehrere Dienpolymere oder Derivate oder Mischungen davon umfasst.

9. Kautschukzusammensetzung nach Anspruch 8, wobei die Dienpolymere aus Butadien, Styrol-Butadien und Derivaten oder Mischungen davon ausgewählt sind.

10. Kautschukzusammensetzung nach einem der Ansprüche 7, 8 oder 9, wobei Kautschukgemisch-Masterbatch Naturkautschuk, ein Polyisopren oder ein Terpolymer oder Derivate oder Mischungen davon umfasst.

11. Kautschukzusammensetzung nach Anspruch 10, wobei das Terpolymer AcrylnitrilButadien-Styrol-Kautschuk (SNBR) oder Styrol-Isopren-Butadien-Kautschuk (SIBR) oder Mischungen oder Derivate davon ist.

12. Kautschukzusammensetzung nach einem der Ansprüche 7 bis 11, wobei das eine oder die polyedrischen oligomeren Silsesquioxane durch die Formel
RSiO_{1,5}
dargestellt ist/sind,
wobei R aus Alkyl-, Cycloalkyl- und Arylgruppen mit 12 bis 20 Kohlenstoffatomen ausgewählt ist.

13. Kautschukzusammensetzung nach Anspruch 12, wobei R aus Cyclohexyl-, Ethyl-, Isobutyl-, Isooctyl-, Vinyl- und Phenylgruppen ausgewählt ist.

14. Kautschukzusammensetzung nach Anspruch 13, wobei das eine oder die polyedrischen oligomeren Silsesquioxane aus polyedrischem oligomeren Trisilanol-Isobutyl-Silsesquioxan und polyedrischem oligomeren Trisilaniol-Isooctyl-Silsesquioxan ausgewählt ist/sind.

15. Reifen, der aus der Zusammensetzung nach einem der Ansprüche 7 bis 14 hergestellt ist.

## Revendications

1. Une méthode de production d'une composition de caoutchouc comprenant les opérations suivantes :
i) une première étape de mélange pour la production d'un mélange maître de caoutchouc ;
ii) une deuxième étape de mélange pour l'ajout d'autres ingrédients ; et
iii) une troisième étape de mélange pour l'ajout de curatifs afin d'obtenir la composition de caoutchouc finale ;
dans laquelle un ou plusieurs silsesquioxanes oligomériques polyédriques sont ajoutés à la deuxième étape de mélange, après la production du mélange maître.

2. Une méthode conformément à la revendication 1, dans laquelle le ou les silsesquioxanes oligomériques polyédriques sont ajoutés au mélange maître à la deuxième étape de mélange afin d'obtenir un montant total de 1 à 10 parts pour cent de polymère de caoutchouc.

3. Une méthode conformément à la revendication 1 ou 2, dans laquelle le ou les silsesquioxanes oligomériques polyédriques sont ajoutés au mélange maître à la deuxième étape de mélange afin d'obtenir un montant total de 2 à 6 parts pour cent de polymère de caoutchouc.

4. Une méthode conformément à la revendication 2 ou 3, dans laquelle le ou les silsesquioxanes oligomériques polyédriques sont ajoutés au mélange maître à la deuxième étape de mélange afin d'obtenir un montant total de 2 parts pour cent de polymère de caoutchouc.

5. Une méthode conformément aux revendications 2 à 4, dans laquelle le mélange maître de caoutchouc ou la composition de caoutchouc est soumis(e) à la vulcanisation.

6. L'utilisation d'une composition de caoutchouc fabriquée selon la méthode de n'importe laquelle des revendications précédentes dans la fabrication de pneus et de tous composants utilisés dans la fabrication de pneus et de tous produits pouvant être utilisés conjointement avec des pneus, notamment pour améliorer la performance des pneus.

7. Une composition de caoutchouc pouvant être obtenue selon un procédé comprenant les opérations suivantes :
i) une première étape de mélange pour la production d'un mélange maître de caoutchouc ;
ii) une deuxième étape de mélange pour l'ajout d'autres ingrédients ; et
iii) une troisième étape de mélange pour l'ajout de curatifs afin d'obtenir la composition de caoutchouc finale ;
dans laquelle un ou plusieurs silsesquioxanes oligomériques polyédriques sont ajoutés à la composition à la deuxième étape de mélange.

8. Une composition de caoutchouc conformément à la revendication 7, dans laquelle le mélange maître de caoutchouc comprend un ou plusieurs polymères diéniques, ou des dérivés ou un mélange de ces polymères.

9. Une composition de caoutchouc conformément à la revendication 8, dans laquelle les polymères diéniques sont sélectionnés parmi les suivants : butadiène, butadiène styrène et ses dérivés, ou des mélange de ces polymères.

10. Une composition de caoutchouc conformément à n'importe laquelle des revendications 7, 8 ou 9, dans laquelle le mélange maître de caoutchouc comprend du caoutchouc naturel, un polyisoprène ou un terpolymère, ou des dérivés ou mélanges de ces éléments.

11. Une composition de caoutchouc conformément à la revendication 10, dans laquelle le terpolymère est du caoutchouc acrylonitrile butadiène styrène (ABS) ou du caoutchouc isoprène butadiène styrène (IBS), ou des dérivés ou mélanges de ces éléments.

12. Une composition de caoutchouc conformément à n'importe laquelle des revendications 7 à 11, dans laquelle le ou les silsesquioxanes oligomériques polyédriques sont chacun représentés par la formule :
RSiO_{1.5}
R étant sélectionné parmi les groupes alkyle, cycloalkyle et aryle ayant entre 1 et 20 atomes de carbone

13. Une composition de caoutchouc conformément à la revendication 12, dans laquelle R est sélectionné parmi les groupes cyclohexyle, éthyle, isobutyle, iso-octyle, vinyle et phényle.

14. Une composition de caoutchouc conformément à la revendication 13, dans laquelle le ou les silsesquioxanes oligomériques polyédriques sont sélectionnés parmi les éléments suivants : silsesquioxane oligomérique polyédrique isobutyle trisilanol et silsesquioxane oligomérique polyédrique iso-octyle trisilanol.

15. Un pneu obtenu à partir de la composition de n'importe laquelle des revendications 7 à 14.
